# EUROPEAN PATENT APPLICATION

(11) **EP 4 383 033 A1**
(43) Date of publication of application: **12.06.2024**
(21) Application number: 22855224.6
(22) Date of filing: 26.07.2022
(51) Int. Cl.: G05B 23/02

(54) **METHOD, APPARATUS, AND SYSTEM FOR REMOTELY DIAGNOSISING VEHICLE**

(30) Priority: 11.08.2021 CN 202110918997
(71) Applicant: Huawei Technologies Co., Ltd., Shenzhen, Guangdong 518129 (CN)
(72) Inventor: WANG, Jun, Shenzhen, Guangdong 518129 (CN); JIANG, Feng, Shenzhen, Guangdong 518129 (CN)
(74) Representative: Maiwald GmbH
(86) International application number: PCT/CN2022/107814
(87) International publication number: WO 2023/016241

(57) **Abstract**

Embodiments of this application provide a vehicle remote diagnosis method, apparatus, and system, and relate to the field of vehicle intelligent control technologies. The method includes: receiving a first diagnosis request packet from a remote diagnosis apparatus, where the first diagnosis request packet is used to perform remote diagnosis on a vehicle, and the first diagnosis request packet includes an identifier of the first diagnosis request packet; determining a first diagnosis response packet based on the identifier of the first diagnosis request packet and diagnosis data of the vehicle, where the diagnosis data is obtained based on the first diagnosis request packet; and sending the first diagnosis response packet to the remote diagnosis apparatus. This solution helps determine a matching relationship between a diagnosis request packet and a diagnosis response packet in a vehicle remote diagnosis scenario, so as to improve accuracy of remote diagnosis and analysis.

## Description

### CROSS-REFERENCE TO RELATED APPLICATIONS

This application claims priority to Chinese Patent Application No. 202110918997.9, filed with the China National Intellectual Property Administration on August 11, 2021 and entitled "VEHICLE REMOTE DIAGNOSIS METHOD, APPARATUS, AND SYSTEM", which is incorporated herein by reference in its entirety.

### TECHNICAL FIELD

Embodiments of this application relate to the field of vehicle intelligent control technologies, and in particular, to a vehicle remote diagnosis method, apparatus, and system.

### BACKGROUND

With the development of in-vehicle communication technologies, remote real-time diagnosis can be performed on a vehicle to greatly reduce a quantity of times of returning the vehicle to the factory for maintenance and time thereof, so that a user and an original equipment manufacturer (Original Equipment Manufacturer, OEM) can take effective safety protection measures in a timely manner, and provide effective vehicle fault data for returning the vehicle to the factory for maintenance. This manner has gradually become one of main vehicle fault diagnosis manners. Currently, an onboard diagnostic standard protocol has been gradually improved and adapted to various remote diagnosis apparatuses, for example, a diagnostic communication over internet protocol (Diagnostic communication over Internet Protocol, DoIP) standard protocol and a diagnostic communication over controller area network (controller area network, CAN) (Diagnostic communication over CAN, DoCAN) standard protocol.

However, the onboard diagnostic standard protocol is mainly a protocol that is defined based on a general network protocol (for example, an IP protocol or a CAN protocol) and that is dedicated to unified diagnostic services (Unified Diagnostic Services, UDS), and a communication mechanism of the general network protocol is limited. Therefore, when the onboard diagnostic standard protocol is applied to a mobile internet and there is uncertainty such as a network delay and network congestion between a cloud server and a vehicle, the cloud server cannot accurately perform matching between a diagnosis request packet and a diagnosis response packet from the vehicle. As a result, there is a problem that a parsing result of the cloud server is inaccurate.

### SUMMARY

Embodiments of this application provide a vehicle remote diagnosis method, apparatus, and system, to help determine a matching relationship between a diagnosis request packet and a diagnosis response packet in a vehicle remote diagnosis scenario, so as to improve accuracy of vehicle remote diagnosis and analysis.

According to a first aspect, an embodiment of this application provides a vehicle remote diagnosis method. The method may be applied to a vehicle remote diagnosis apparatus. The vehicle remote diagnosis apparatus may be deployed on a vehicle end, and may be applied to an entire vehicle or a chip or a component in the vehicle, or may be a software module that may be deployed on another intelligent device in a vehicle, for example, a mobile phone or a tablet computer. In this embodiment of this application, for ease of differentiation, on a vehicle side, the vehicle remote diagnosis apparatus may be referred to as a vehicle-end diagnosis proxy apparatus. For example, the vehicle-end diagnosis proxy apparatus may be integrated into a telematics box (telematics BOX, T-Box), a domain controller (domain controller, DC), a multi-domain controller (multi-domain controller, MDC), an onboard unit (onboard unit, OBU), an in-vehicle gateway, or the like in a vehicle. A deployment manner or a product form of the vehicle-end diagnosis proxy apparatus is not limited in this embodiment of this application.

The method includes: receiving a first diagnosis request packet from a remote diagnosis apparatus, where the first diagnosis request packet is used to perform remote diagnosis on a vehicle, and the first diagnosis request packet includes an identifier of the first diagnosis request packet; determining a first diagnosis response packet based on the identifier of the first diagnosis request packet and diagnosis data of the vehicle, where the diagnosis data is obtained based on the first diagnosis request packet; and sending the first diagnosis response packet to the remote diagnosis apparatus.

Based on the foregoing method, a session mechanism is introduced into a related onboard diagnostic standard protocol, the identifier of the first diagnosis request packet is added into the packet, and the first diagnosis request packet is responded to based on the same identifier, so that the first diagnosis request packet and the corresponding diagnosis response packet are associated based on the same identifier. This helps determine a matching relationship between a diagnosis request packet and a diagnosis response packet in a vehicle remote diagnosis scenario, so as to improve accuracy of remote diagnosis and analysis.

With reference to the first aspect, in a possible implementation, the first diagnosis request packet further includes a payload and first indication information, and the first indication information is used to indicate that the first diagnosis request packet includes a data header associated with the payload.

Based on the foregoing method, the first indication information used to indicate the data header associated with the packet payload is added into the first diagnosis request packet, so that the diagnosis proxy apparatus on the vehicle side can parse the data header to obtain related explanations and descriptions of the packet payload. This helps determine a matching relationship between a diagnosis request packet and a diagnosis response packet in a vehicle remote diagnosis scenario, so as to improve accuracy of remote diagnosis and analysis.

With reference to the first aspect, in a possible implementation, the first diagnosis request packet may further include second indication information, and the second indication information is used to indicate that the first diagnosis request packet belongs to a group of diagnosis request packet sequences.

Based on the foregoing method, a long diagnosis instruction sequence mechanism is introduced into the related onboard diagnostic standard protocol, and the second indication information used to indicate whether the first diagnosis request packet belongs to a group of diagnosis request packet sequences is added into the packet, so that the diagnosis proxy apparatus on the vehicle side can parse the second indication information to obtain related explanations and descriptions of the group of diagnosis request packet sequences. This helps determine a matching relationship between a diagnosis request packet and a diagnosis response packet in a vehicle remote diagnosis scenario, so as to improve accuracy of remote diagnosis and analysis.

With reference to the first aspect, in a possible implementation, the first diagnosis request packet may further include third indication information, and the third indication information is used to indicate the following attribute information: an identifier of the group of diagnosis request packet sequences, a quantity of diagnosis request packets in the group of diagnosis request packet sequences, and a sequence number of the first diagnosis request packet in the group of diagnosis request packet sequences.

Based on the foregoing method, the third indication information is added into the first diagnosis request packet to indicate an association relationship between the first diagnosis request packet and a diagnosis request packet sequence to which the first diagnosis request packet belongs. This helps determine a matching relationship between a diagnosis request packet and a diagnosis response packet in a vehicle remote diagnosis scenario, so as to improve accuracy of remote diagnosis and analysis.

With reference to the first aspect, in a possible implementation, the first diagnosis request packet belongs to a group of diagnosis request packet sequences, and the method further includes: indicating, based on an identifier of the group of diagnosis request packet sequences and a sequence number of the first diagnosis request packet in the group of diagnosis request packet sequences, the remote diagnosis apparatus to send the first diagnosis request packet.

Based on the foregoing method, the remote diagnosis apparatus and the diagnosis proxy apparatus on the vehicle side may negotiate with each other for a sending, resending, and supplementary sending mechanism of a plurality of frames of request packets and response packets, to reduce packet loss of some packets. This helps determine a matching relationship between a diagnosis request packet and a diagnosis response packet in a vehicle remote diagnosis scenario, so as to improve accuracy of remote diagnosis and analysis.

With reference to the first aspect, in a possible implementation, the first diagnosis request packet belongs to a group of diagnosis request packet sequences, and the method further includes: performing packet assembly on at least two diagnosis request packets belonging to a same group of diagnosis request packet sequences, where the at least two diagnosis request packets include the first diagnosis request packet.

Based on the foregoing method, when a long diagnosis instruction sequence mechanism is introduced, after receiving at least two diagnosis request packets belonging to a same group of diagnosis request packet sequences, the diagnosis proxy apparatus on the vehicle side may perform packet assembly processing on and respond to the at least two diagnosis request packets, thereby reducing a problem that parsing is inaccurate because packets in a sequence are disordered due to uncertainty such as a network delay and network congestion. This helps determine a matching relationship between a diagnosis request packet and a diagnosis response packet in a vehicle remote diagnosis scenario, so as to improve accuracy of remote diagnosis and analysis.

With reference to the first aspect, in a possible implementation, the determining a first diagnosis response packet based on the identifier of the first diagnosis request packet and diagnosis data of the vehicle includes: when the diagnosis data meets a first packet fragmentation condition, determining at least two diagnosis response packets based on the identifier of the first diagnosis request packet and the diagnosis data, where the at least two diagnosis response packets include the first diagnosis response packet, the at least two diagnosis response packets belong to a same group of diagnosis response packet sequences, and the at least two diagnosis response packets each include the identifier of the first diagnosis request packet.

Based on the foregoing method, a packet fragmentation mechanism is introduced into the related onboard diagnostic standard protocol, so that the diagnosis proxy apparatus on the vehicle side can send the diagnosis data of the vehicle a plurality of times through packet fragmentation, thereby reducing a problem that parsing is inaccurate because some packets are discarded due to a limited data packet capacity. This helps determine a matching relationship between a diagnosis request packet and a diagnosis response packet in a vehicle remote diagnosis scenario, so as to improve accuracy of remote diagnosis and analysis.

According to a second aspect, an embodiment of this application provides a vehicle remote diagnosis method. The method may be applied to a remote diagnosis apparatus. The remote diagnosis apparatus may be an independent device or a chip or a component in the device, or may be an application program or a software module, may be installed and run in an intelligent device such as a mobile phone or a tablet computer, and may be deployed in a cloud server. A deployment manner or a product form of the remote diagnosis apparatus is not limited in this embodiment of this application.

The method includes: determining a first diagnosis request packet, where the first diagnosis request packet is used to perform remote diagnosis on a vehicle, and the first diagnosis request packet includes an identifier of the first diagnosis request packet; sending the first diagnosis request packet to the vehicle; and receiving a first diagnosis response packet of the vehicle, where the first diagnosis response packet includes the identifier of the first diagnosis request packet and diagnosis data of the vehicle, and the diagnosis data is obtained based on the first diagnosis request packet.

With reference to the second aspect, in a possible implementation, the first diagnosis request packet further includes a payload and first indication information, and the first indication information is used to indicate that the first diagnosis request packet includes a data header associated with the payload.

With reference to the second aspect, in a possible implementation, the first diagnosis request packet further includes second indication information, and the second indication information is used to indicate that the first diagnosis request packet belongs to a group of diagnosis request packet sequences.

With reference to the second aspect, in a possible implementation, the first diagnosis request packet further includes third indication information, and the third indication information is used to indicate the following attribute information: an identifier of the group of diagnosis request packet sequences, a quantity of diagnosis request packets in the group of diagnosis request packet sequences, and a sequence number of the first diagnosis request packet in the group of diagnosis request packet sequences.

With reference to the second aspect, in a possible implementation, the determining a first diagnosis request packet includes: when a diagnosis task meets a second packet fragmentation condition, determining at least two diagnosis request packets, where the at least two diagnosis request packets include the first diagnosis request packet, and the at least two diagnosis request packets belong to a same group of diagnosis request packet sequences.

With reference to the second aspect, in a possible implementation, the sending the first diagnosis request packet to the vehicle includes: sending, to the vehicle, a group of diagnosis request packet sequences to which the first diagnosis request packet belongs; or sending the first diagnosis request packet to the vehicle based on an identifier of a group of diagnosis request packet sequences and a sequence number of the first diagnosis request packet in the group of diagnosis request packet sequences that are indicated by the vehicle.

With reference to the second aspect, in a possible implementation, the first diagnosis response packet belongs to a group of diagnosis response packet sequences, and the method further includes: performing packet assembly on at least two diagnosis response packets belonging to a same group of diagnosis response packet sequences, where the at least two diagnosis response packets include the first diagnosis response packet.

According to a third aspect, an embodiment of this application provides a vehicle remote diagnosis apparatus, including: a receiving unit, configured to receive a first diagnosis request packet from a remote diagnosis apparatus, where the first diagnosis request packet is used to perform remote diagnosis on a vehicle, and the first diagnosis request packet includes an identifier of the first diagnosis request packet; a processing unit, configured to determine a first diagnosis response packet based on the identifier of the first diagnosis request packet and diagnosis data of the vehicle, where the diagnosis data is obtained based on the first diagnosis request packet; and a sending unit, configured to send the first diagnosis response packet to the remote diagnosis apparatus.

With reference to the third aspect, in a possible implementation, the first diagnosis request packet further includes a payload and first indication information, and the first indication information is used to indicate that the first diagnosis request packet includes a data header associated with the payload.

With reference to the third aspect, in a possible implementation, the first diagnosis request packet further includes second indication information, and the second indication information is used to indicate that the first diagnosis request packet belongs to a group of diagnosis request packet sequences.

With reference to the third aspect, in a possible implementation, the first diagnosis request packet further includes third indication information, and the third indication information is used to indicate the following attribute information: an identifier of the group of diagnosis request packet sequences, a quantity of diagnosis request packets in the group of diagnosis request packet sequences, and a sequence number of the first diagnosis request packet in the group of diagnosis request packet sequences.

With reference to the third aspect, in a possible implementation, the first diagnosis request packet belongs to a group of diagnosis request packet sequences, and the apparatus further includes: an indication unit, configured to indicate, based on an identifier of the group of diagnosis request packet sequences and a sequence number of the first diagnosis request packet in the group of diagnosis request packet sequences, the remote diagnosis apparatus to send the first diagnosis request packet.

With reference to the third aspect, in a possible implementation, the first diagnosis request packet belongs to a group of diagnosis request packet sequences, and the apparatus further includes: a packet assembly unit, configured to perform packet assembly on at least two diagnosis request packets belonging to a same group of diagnosis request packet sequences, where the at least two diagnosis request packets include the first diagnosis request packet.

With reference to the third aspect, in a possible implementation, the processing unit is configured to: when the diagnosis data meets a first packet fragmentation condition, determine at least two diagnosis response packets based on the identifier of the first diagnosis request packet and the diagnosis data, where the at least two diagnosis response packets include the first diagnosis response packet, the at least two diagnosis response packets belong to a same group of diagnosis response packet sequences, and the at least two diagnosis response packets each include the identifier of the first diagnosis request packet.

According to a fourth aspect, an embodiment of this application provides a vehicle remote diagnosis apparatus, including: a processing unit, configured to determine a first diagnosis request packet, where the first diagnosis request packet is used to perform remote diagnosis on a vehicle, and the first diagnosis request packet includes an identifier of the first diagnosis request packet; a sending unit, configured to send the first diagnosis request packet to the vehicle; and a receiving unit, configured to receive a first diagnosis response packet of the vehicle, where the first diagnosis response packet includes the identifier of the first diagnosis request packet and diagnosis data of the vehicle, and the diagnosis data is obtained based on the first diagnosis request packet.

With reference to the fourth aspect, in a possible implementation, the first diagnosis request packet further includes a payload and first indication information, and the first indication information is used to indicate that the first diagnosis request packet includes a data header associated with the payload.

With reference to the fourth aspect, in a possible implementation, the first diagnosis request packet further includes second indication information, and the second indication information is used to indicate that the first diagnosis request packet belongs to a group of diagnosis request packet sequences.

With reference to the fourth aspect, in a possible implementation, the first diagnosis request packet further includes third indication information, and the third indication information is used to indicate the following attribute information: an identifier of the group of diagnosis request packet sequences, a quantity of diagnosis request packets in the group of diagnosis request packet sequences, and a sequence number of the first diagnosis request packet in the group of diagnosis request packet sequences.

With reference to the fourth aspect, in a possible implementation, the processing unit is configured to: when a diagnosis task meets a second packet fragmentation condition, determine at least two diagnosis request packets, where the at least two diagnosis request packets include the first diagnosis request packet, and the at least two diagnosis request packets belong to a same group of diagnosis request packet sequences.

With reference to the fourth aspect, in a possible implementation, the sending unit is configured to: send, to the vehicle, a group of diagnosis request packet sequences to which the first diagnosis request packet belongs; or send the first diagnosis request packet to the vehicle based on an identifier of a group of diagnosis request packet sequences and a sequence number of the first diagnosis request packet in the group of diagnosis request packet sequences that are indicated by the vehicle.

With reference to the fourth aspect, in a possible implementation, the first diagnosis response packet belongs to a group of diagnosis response packet sequences, and the apparatus further includes: a packet assembly unit, configured to perform packet assembly on at least two diagnosis response packets belonging to a same group of diagnosis response packet sequences, where the at least two diagnosis response packets include the first diagnosis response packet.

According to a fifth aspect, an embodiment of this application provides a vehicle remote diagnosis apparatus, including a processor and a memory. The memory is configured to store a program, and the processor is configured to execute the program stored in the memory, so that the apparatus implements the method according to any one of the first aspect or the possible designs of the first aspect.

According to a sixth aspect, an embodiment of this application provides a vehicle remote diagnosis apparatus, including a processor and a memory. The memory is configured to store a program, and the processor is configured to execute the program stored in the memory, so that the apparatus implements the method according to any one of the second aspect or the possible designs of the second aspect.

According to a seventh aspect, an embodiment of this application provides a vehicle remote diagnosis system, including the vehicle remote diagnosis apparatus according to any one of the third aspect or the possible designs of the third aspect and the vehicle remote diagnosis apparatus according to any one of the fourth aspect or the possible designs of the fourth aspect.

According to an eighth aspect, an embodiment of this application provides a computer-readable storage medium. The computer-readable storage medium stores program code. When the program code runs on a computer, the computer is enabled to perform the method according to the first aspect and the possible designs of the first aspect, or when the program code runs on a computer, the computer is enabled to perform the method according to the second aspect and the possible designs of the second aspect.

According to a ninth aspect, an embodiment of this application provides a computer program product. When the computer program product runs on a computer, the computer is enabled to perform the method according to the first aspect and the possible designs of the first aspect or perform the method according to the second aspect and the possible designs of the second aspect.

According to a tenth aspect, an embodiment of this application provides a chip system. The chip system includes a processor, configured to invoke a computer program or computer instructions stored in a memory, so that the processor performs the method according to the first aspect and the possible designs of the first aspect or performs the method according to the second aspect and the possible designs of the second aspect.

With reference to the tenth aspect, in a possible implementation, the processor is coupled to the memory by using an interface.

With reference to the tenth aspect, in a possible implementation, the chip system further includes a memory, and the memory stores a computer program or computer instructions.

According to an eleventh aspect, an embodiment of this application provides a processor. The processor is configured to invoke a computer program or computer instructions stored in a memory, so that the processor performs the method according to the first aspect and the possible designs of the first aspect or performs the method according to the second aspect and the possible designs of the second aspect.

In the embodiments of this application, based on the implementations provided in the foregoing aspects, further combination may be performed to provide more implementations.

For technical effects that can be achieved in any possible design in any one of the third aspect to the eleventh aspect, correspondingly refer to descriptions of technical effects that can be achieved in any possible design of either the first aspect or the second aspect. No repeated description is provided.

### BRIEF DESCRIPTION OF DRAWINGS

FIG. 1 is a schematic diagram of an application scenario to which an embodiment of this application is applicable;
FIG. 2 is a diagram of a system architecture to which an embodiment of this application is applicable;
FIG. 3 is a schematic diagram of a packet structure;
FIG. 4 is a schematic diagram of a first packet format;
FIG. 5 is a schematic diagram of a second packet format;
FIG. 6 is a schematic diagram of a third packet format;
FIG. 7 is a schematic diagram of a packet structure;
FIG. 8 is a schematic flowchart of a vehicle remote diagnosis method according to an embodiment of this application;
FIG. 9 is a schematic diagram of a vehicle remote diagnosis apparatus according to an embodiment of this application;
FIG. 10 is a schematic diagram of a vehicle remote diagnosis apparatus according to an embodiment of this application; and
FIG. 11 is a schematic diagram of a vehicle remote diagnosis apparatus according to an embodiment of this application.

### DESCRIPTION OF EMBODIMENTS

With the development of technologies, various services in the vehicle industry become increasingly mature, and an electrical system of a vehicle becomes increasingly complex. In a system of the vehicle, many components referred to as electronic control units (electronic control unit, ECU) are usually configured, and the ECU is a vehicle-specific microcomputer controller. A plurality of ECUs transmit information to each other based on an automotive bus (automotive bus) (a multiplexing communication network technology), to form a local area network inside the vehicle. Currently, the automobile bus mainly includes: a controller area network (controller area network, CAN) bus, a local interconnect network (Local Interconnect Network, LIN) bus, a highspeed fault-tolerant network protocol (FlexRay) bus, a media oriented systems transport (Media Oriented Systems Transport, MOST) bus used for automobile multimedia and navigation, Bluetooth compatible with a computer network, a wireless local area network, and the like

In an onboard diagnostic standard protocol, when implementing remote diagnosis on a vehicle, a remote diagnosis apparatus generally communicates with a plurality of ECUs in the vehicle, and perform fault diagnosis on a bottom-layer vehicular device or vehicular instrument in an in-vehicle network in a corresponding remote diagnosis manner based on the automobile bus, for example, read fault code, clear fault code, set code, read a data stream, read vehicle information, perform routine control, perform ECU reset, perform action testing, and perform program writing. Currently, the related onboard diagnostic standard protocol has been gradually improved and adapted to various remote diagnosis apparatuses, so as to adapt to gradually improved vehicle functions and complex ECUs, and also adapt to extension and upgrade of various ECU functions that are continuously added to the vehicle.

In a mobile internet scenario, the remote diagnosis apparatus may be a cloud diagnosis application program (briefly referred to as a cloud diagnosis application) installed and run on a mobile device. The cloud diagnosis application may use a related onboard diagnostic standard protocol such as a diagnostic communication over internet protocol (Diagnostic communicate over Internet Protocol, DoIP) standard or a diagnostic communication over controller area network (controller area network, CAN) (Diagnose over CAN, DoCAN) standard protocol, to implement, by using a cloud server and an in-vehicle device, protocol conversion and data transmission between different devices based on at least one of the foregoing automobile buses, so as to implement remote real-time diagnosis on a vehicle.

However, the foregoing related onboard diagnostic standard protocol is mainly a protocol that is defined based on a general network protocol (for example, an IP protocol or a CAN protocol) and that is dedicated to unified diagnostic services (Unified Diagnostic Services, UDS), and a communication mechanism of the general network protocol is limited. Therefore, in this scenario, when there is uncertainty such as a network delay and network congestion between the cloud server and the in-vehicle device, the cloud server cannot accurately perform matching between a diagnosis request packet and a diagnosis response packet from a vehicle-end communication device. As a result, there is a problem that a parsing result of the cloud server is inaccurate.

Embodiments of this application provide a vehicle remote diagnosis method, apparatus, and system. A session (session) mechanism is introduced into the related onboard diagnostic standard protocol, to help accurately determine a matching relationship between a diagnosis request packet and a diagnosis response packet in a vehicle remote diagnosis scenario, so as to improve accuracy of vehicle remote diagnosis and analysis. The method and the apparatus are based on a same technical idea. Because a problem-resolving principle of the method is similar to a problem-resolving principle of the apparatus, mutual reference may be made to implementations of the apparatus and the method. No repeated description is provided.

It should be noted that the vehicle remote diagnosis solution in the embodiments of this application may be applied to the internet of vehicles, for example, vehicle-to-everything (vehicle-to-everything, V2X), long term evolution-vehicle (long term evolution-vehicle, LTE-V), or vehicle to vehicle (vehicle to vehicle, V2V). For example, the solution may be applied to a vehicle having a driving movement function, or another apparatus having a driving movement function in a vehicle. The another apparatus includes but is not limited to another sensor such as an onboard terminal, an onboard controller, an onboard module, an onboard component, an onboard chip, an onboard unit, an onboard radar, or an onboard camera. The vehicle may implement, by using the onboard terminal, the onboard controller, the onboard module, the onboard component, the onboard chip, the onboard unit, the onboard radar, or the onboard camera, the vehicle remote diagnosis method provided in the embodiments of this application. Certainly, the control solution in the embodiments of this application may be applied to another intelligent terminal having a movement control function other than a vehicle, or set in another intelligent terminal having a movement control function other than a vehicle, or set in a component of the intelligent terminal. The intelligent terminal may be an intelligent transportation device, a smart home device, a robot, or the like. For example, the intelligent terminal includes but is not limited to an intelligent terminal or another sensor such as a controller, a chip, a radar, or a camera in the intelligent terminal, and another component.

It should be noted that, in the embodiments of this application, "at least one" means one or more, and "a plurality of" means two or more. A term "and/or" describes an association relationship between associated objects and represents that three relationships may exist. For example, A and/or B may represent the following cases: Only A exists, both A and B exist, and only B exists, where A and B may be singular or plural. The character "/" generally indicates an "or" relationship between the associated objects. "At least one of the following items (pieces)" or a similar expression thereof refers to any combination of these items, including any combination of singular items (pieces) or plural items (pieces). For example, at least one item (piece) of a, b, or c may represent: a, b, c, a and b, a and c, b and c, or a, b, and c, where a, b, and c may be singular or plural.

In addition, unless otherwise specified, ordinal numbers such as "first" and "second" mentioned in the embodiments of this application are used to distinguish between a plurality of objects, but are not used to limit priorities or importance of the plurality of objects. For example, first indication information and second indication information are merely intended to distinguish between different indication information, but do not indicate that the two types of indication information have different priorities, importance, or the like.

For ease of understanding, the following is described with reference to accompanying drawings and embodiments.

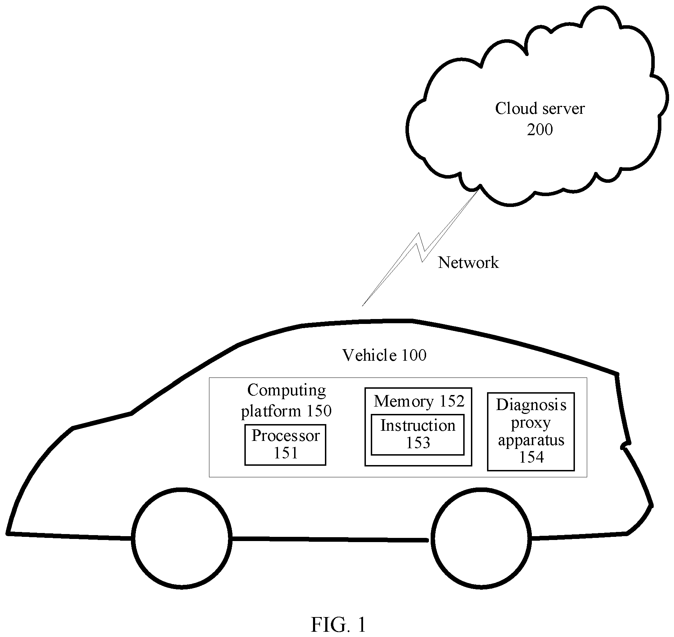

FIG. 1 is a schematic diagram of an application scenario to which an embodiment of this application is applicable. In this application scenario, a vehicle 100 and a cloud server 200 may be included. The vehicle 100 and the cloud server 200 may communicate with each other by using a network
Some or all functions of the vehicle 100 are controlled by a computing platform 150. The computing platform 150 may include at least one processor 151, and the processor 151 may execute an instruction 153 stored in a non-transient computer-readable medium such as a memory 152. In some embodiments, the computing platform 150 may alternatively be a plurality of computing devices that control an individual component or a subsystem of the vehicle 100 in a distributed manner. The processor 151 may be any conventional processor such as a central processing unit (central processing unit, CPU). Alternatively, the processor 151 may include, for example, a graphics processing unit (graphics processing unit, GPU), a field programmable gate array (field programmable gate array, FPGA), a system on chip (system on chip, SOC), an application-specific integrated chip (application-specific integrated circuit, ASIC), or a combination thereof.

In addition to the instruction 153, the memory 152 may further store data such as a road map, route information, a location, a direction, and a speed of the vehicle, other such vehicle data, and other information. Such information may be used by the vehicle 100 and the computing platform 150 when the vehicle 100 is operated in an autonomous mode, a semi-autonomous mode, and/or a manual mode. It should be understood that the structure of the vehicle in FIG. 1 should not be understood as a limitation on this embodiment of this application.

Optionally, the vehicle 100 may be a car, a truck, a motorcycle, a bus, a boat, an airplane, a helicopter, a lawn mower, a recreational vehicle, a playground vehicle, a construction device, a trolley, a golf cart, a train, or the like. This is not specifically limited in this embodiment of this application.

In addition, the application scenario shown in FIG. 1 may further include the cloud server 200. In this embodiment of this application, a remote diagnosis apparatus may be deployed in the cloud server 200. The remote diagnosis apparatus may send a remote diagnosis request packet to the vehicle, receive a diagnosis response packet from the vehicle, and perform matching between and parse the diagnosis request packet and the corresponding diagnosis response packet, to implement remote diagnosis on the vehicle, thereby improving accuracy of vehicle remote diagnosis and analysis. The vehicle 100 may further include a diagnosis proxy apparatus 154. The diagnosis proxy apparatus 154 may process the diagnosis request packet from the remote diagnosis apparatus, and feed back the diagnosis response packet to the remote diagnosis apparatus, so that the remote diagnosis apparatus completes remote real-time diagnosis on the vehicle. It should be noted that the diagnosis proxy apparatus 154 shown in FIG. 1 is merely used to indicate that the computing platform 150 on a vehicle side may implement a diagnosis proxy function. The diagnosis proxy function may be implemented by an independent apparatus, or may be implemented by the processor 151. This is not limited in this embodiment of this application.

In an embodiment, the cloud server may be further implemented by using a virtual machine.

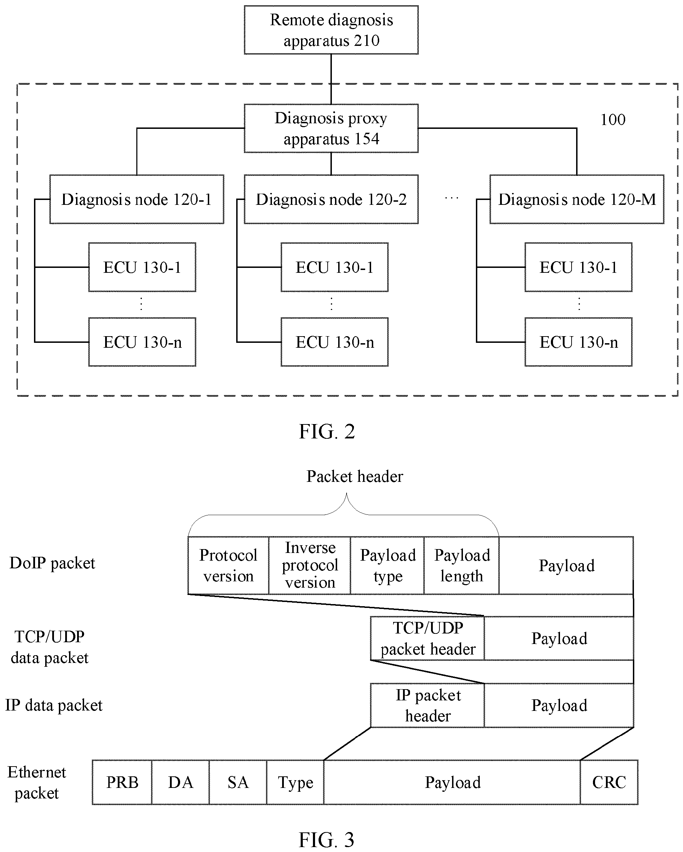

FIG. 2 is a diagram of a system architecture to which an embodiment of this application is applicable. Referring to FIG. 2, the system may include a remote diagnosis apparatus 210, and a diagnosis proxy apparatus 154, M diagnosis nodes (node) 120, and n ECUs 130 associated with any diagnosis node 120 on a vehicle 100 side. M and n are integers greater than or equal to 1.

The remote diagnosis apparatus 210 may be an application program, or a software module, or an independent device or a chip or a component in the device, may be deployed in the cloud server 200 shown in FIG. 1, and may be controlled by using an application program installed and running in an intelligent device such as a mobile phone or a tablet computer. The diagnosis proxy apparatus 154 may be an in-vehicle T-Box on the vehicle 100, or may be an in-vehicle gateway or another in-vehicle device on the vehicle. A deployment manner or a product form of the remote diagnosis apparatus 210 or the diagnosis proxy apparatus 154 is not limited in this embodiment of this application.

In this embodiment of this application, the diagnosis proxy apparatus may be referred to as an in-vehicle diagnosis edge node on the vehicle side. The diagnosis proxy apparatus may activate a corresponding diagnosis node (node) based on an activation request packet from the remote diagnosis apparatus, and each activated diagnosis node obtains diagnosis data of the vehicle from an associated ECU based on a diagnosis request packet from the remote diagnosis apparatus. The M diagnosis nodes 120 may include but are not limited to an integrated cockpit controller (Integrated Cockpit Controller, ICC), a self-driving unit (for example, an advanced driver assistance system (Advanced Driver Assistance System, ADAS)), a vehicle control unit (Vehicle control unit, VCU), a body control module (body control module, BCM), and the like. Diagnosis types of different diagnosis nodes 120 may be different. For example, the ICC, the ADAS, and the VCU can implement diagnosis by using the DoIP protocol, and the BCM can implement diagnosis by using the DoCAN protocol.

When determining that remote diagnosis needs to be performed on the vehicle 100, the remote diagnosis apparatus 210 may determine a diagnosis request packet, and send the diagnosis request packet to the vehicle 100, to initiate a remote diagnosis procedure to the vehicle 100. Correspondingly, the diagnosis proxy apparatus 154 on the vehicle 100 side may receive the diagnosis request packet from the remote diagnosis apparatus 210, and perform remote diagnosis on each ECU 130 of the vehicle 100 based on the diagnosis request packet and a corresponding diagnosis node 120, to obtain diagnosis data of the vehicle. Further, the diagnosis proxy apparatus 154 on the vehicle 100 side may feed back a diagnosis response packet to the remote diagnosis apparatus 210 based on the diagnosis data of the vehicle. Correspondingly, the remote diagnosis apparatus 210 may parse the diagnosis response packet from the vehicle to obtain a vehicle remote diagnosis result.

In this embodiment of this application, to accurately determine a matching relationship between a diagnosis request packet and a diagnosis response packet, so as to improve accuracy of vehicle remote diagnosis and analysis, in a possible implementation, a session (session) mechanism is introduced into a related onboard diagnostic standard protocol, and a new packet format (which may be represented as a first packet format for ease of differentiation) is formulated accordingly. In this way, the remote diagnosis apparatus 210 and the diagnosis proxy apparatus 154 on the vehicle 100 side each may determine, based on the first packet format, a corresponding packet to be transmitted to a peer apparatus, thereby reducing a problem that a parsing result is inaccurate due to uncertainty such as a network delay and network congestion.

During implementation, the remote diagnosis apparatus 210 (namely, an initiator of a diagnosis request, or referred to as a sender of a diagnosis request packet or a receiver of a diagnosis response packet) may add, into a diagnosis request packet determined based on the first packet format, an identifier of the diagnosis request packet. The identifier may be used to uniquely identify the diagnosis request packet. Correspondingly, when feeding back a diagnosis response packet to the sender based on the diagnosis request packet, the diagnosis proxy apparatus 154 (namely, a responder of a diagnosis request, or referred to as a receiver of a diagnosis request packet or a sender of a diagnosis response packet) may add the identifier of the diagnosis request packet into the diagnosis response packet. In this way, the initiator of the diagnosis request may determine a matching relationship between the diagnosis request packet and the diagnosis response packet based on the same identifier, and accurately determine a response to a specific diagnosis request packet from a plurality of diagnosis response packets fed back by the responder of the diagnosis request, thereby ensuring accuracy of a vehicle remote diagnosis parsing result.

It should be noted that, in this embodiment of this application, the identifier of the diagnosis request packet may be specifically a sequence number (sequence Identity document), a number, or the like. A specific implementation of the identifier is not limited in this embodiment of this application. The identifier may be carried in a corresponding field of the diagnosis request packet or the diagnosis response packet based on experience or a service requirement. The identifier is described below based on a specific packet structure example, and details are not described herein.

In some cases, the initiator of the diagnosis request may need to initiate a group of diagnosis request packet sets (including a plurality of diagnosis request packets) to a to-be-diagnosed vehicle based on a group of continuous diagnosis instruction transactions. The plurality of diagnosis request packets in the set need to be processed and responded to based on a packet sequence. When there is uncertainty such as a network delay and network congestion between the cloud server and the vehicle, there is a problem that the sequence of the plurality of diagnosis request packets in the set may be disordered. Consequently, processing of and responding to the plurality of diagnosis request packets are disordered, and the cloud server cannot accurately perform matching between a diagnosis request packet and diagnosis response packet from the vehicle. As a result, a parsing result is inaccurate.

In this embodiment of this application, to determine a matching relationship between a diagnosis request packet and a diagnosis response packet, so as to improve accuracy of vehicle remote diagnosis and analysis, in a possible implementation, a long diagnosis instruction sequence mechanism is introduced into the related onboard diagnostic standard protocol, and a new packet format (which may be represented as a second packet format for ease of differentiation) is formulated accordingly. In this way, the remote diagnosis apparatus 210 and the diagnosis proxy apparatus 154 on the vehicle 100 side each may determine, based on the second packet format, a corresponding packet sequence (including a plurality of packets) to be transmitted to a peer apparatus. Therefore, several diagnosis request packets belonging to a same group of diagnosis request packet sequences and a diagnosis response packet are parsed, thereby reducing a problem that a parsing result is inaccurate due to uncertainty such as a network delay and network congestion.

Optionally, the remote diagnosis apparatus 210 may determine, based on a diagnosis task, whether a group of diagnosis request packet sequences needs to be sent to the to-be-diagnosed vehicle. If not needed, the remote diagnosis apparatus 210 may send a single diagnosis request packet to the vehicle, and the diagnosis request packet does not include a packet header associated with a packet payload. If needed, the remote diagnosis apparatus 210 may send a group of diagnosis request packet sequences to the vehicle, and add, into each diagnosis request packet in the group of diagnosis request packet sequences based on the second packet format, a packet header associated with a packet payload. Related information included in the packet header may be used to explain and describe a related attribute of the packet payload of the diagnosis request packet, so that the diagnosis proxy apparatus 154 on the vehicle side can parse and respond to the received diagnosis request packet based on the related information in the packet header.

In an example, the remote diagnosis apparatus 210 may add first indication information into the diagnosis request packet when the diagnosis request packet includes the packet header associated with the packet payload, where the first indication information may be used to indicate that the diagnosis request packet includes the packet header associated with the packet payload, and may not add first indication information into the diagnosis request packet when the diagnosis request packet does not include the packet header associated with the packet payload. Alternatively, in another example, first indication information is added into the diagnosis request packet, and the first indication information may be used to indicate whether the diagnosis request packet includes the packet header associated with the packet payload. The first indication information may use different byte values to indicate whether the diagnosis request packet includes the packet header associated with the payload. For example, a value of the first indication information may be 0x00, indicating that the diagnosis request packet does not include the packet header associated with the packet payload; or a value of the first indication information may be 0x01, indicating that the diagnosis request packet includes the packet header associated with the packet payload. Correspondingly, when the diagnosis request packet does not include the first indication information or the value of the first indication information is 0x00, the diagnosis proxy apparatus 154 may parse and respond to the packet payload of the diagnosis request packet based on a packet format of the related onboard diagnostic standard protocol; or when the diagnosis request packet includes the first indication information or the value of the first indication information is 0x01, the diagnosis proxy apparatus 154 may parse and respond to the packet header associated with the packet payload and the packet payload based on the second packet format.

In another example, the diagnosis request packet may include second indication information, and the second indication information may be used to indicate whether the diagnosis request packet belongs to a group of diagnosis request packet sequences. For example, the second indication information may be included in the packet header associated with the packet payload of the diagnosis request packet. The second indication information may also use different byte values to indicate whether the diagnosis request packet belongs to a group of diagnosis request packet sequences. For example, a value of the second indication information may be 0x00, indicating that the diagnosis request packet is triggered by using a single diagnosis instruction transaction and does not belong to a diagnosis request packet sequence; or a value of the second indication information may be 0x01, indicating that the diagnosis request packet is triggered by a group of continuous diagnosis instruction transactions and belongs to a group of diagnosis request packet sequences. Correspondingly, when the value of the second indication information is 0x00, the diagnosis proxy apparatus 154 may parse and respond to the packet payload of the diagnosis request packet based on a packet format of the related onboard diagnostic standard protocol; or when the value of the second indication information is 0x01, the diagnosis proxy apparatus 154 may perform packet assembly processing and respond to, based on the second packet format, at least two diagnosis request packets belonging to a same group of diagnosis request packet sequences.

In another example, the diagnosis request packet may include third indication information, and the third indication information is used to indicate the following attribute information: an identifier of the group of diagnosis request packet sequences, a quantity of diagnosis request packets in the group of diagnosis request packet sequences, and a sequence number of the current diagnosis request packet in the group of diagnosis request packet sequences. For example, the third indication information may be included in the packet header associated with the packet payload of the diagnosis request packet. Correspondingly, the diagnosis proxy apparatus 154 may specifically perform, based on the third indication information, the operation of performing packet assembly processing and respond to at least two diagnosis request packets belonging to a same group of diagnosis request packet sequences.

It should be noted that, in this embodiment of this application, a new field (for example, a field that carries at least one of the identifier of the diagnosis request packet, the first indication information, the second indication information, and the third indication information) added into the diagnosis request packet based on the related onboard diagnostic standard protocol may be considered to belong to the packet header associated with the packet payload of the diagnosis request packet, and the packet header may be added into the diagnosis request packet as a whole. Alternatively, the packet header associated with the packet payload may include only a part of the foregoing new field, for example, include the first indication information, the second indication information, and the third indication information. In addition, carrying positions of different new information in the diagnosis request packet may be adjacent or may not be adjacent. Description is given below based on a specific packet structure example, and details are not described herein.

In some cases, in a basic communication protocol (for example, the DoIP protocol) of the related onboard diagnostic standard protocol, a packet length is allowed to exceed 4 GB (UDS data area, 0 to 2^{^32}-1). However, the in-vehicle gateway (gateway, GW) on the vehicle 100 side has a maximum data packet buffer (buffer) limit of 4 KB, that is, a maximum specification of a packet forwarded by the in-vehicle gateway GW is 4096 bytes. When a data length of a data packet returned by the ECU is greater than 4 KB, the data packet is discarded, that is, a DoIP diagnosis response packet should not exceed 4 KB. In addition, the DoIP protocol does not support sending of the diagnosis result a plurality of times through packet fragmentation. Consequently, the cloud server receives only a part of the diagnosis result from the vehicle. There is also a problem that a parsing result of the cloud server is inaccurate.

In this embodiment of this application, to determine a matching relationship between a diagnosis request packet and a diagnosis response packet, so as to improve accuracy of vehicle remote diagnosis and analysis, in a possible implementation, a packet fragmentation mechanism is introduced into the related onboard diagnostic standard protocol, and a new packet format (which may be represented as a third packet format for ease of differentiation) is formulated accordingly. In this way, the diagnosis proxy apparatuses 154 on the vehicle 100 side may determine, based on the third packet format, a diagnosis response packet sequence (including a plurality of diagnosis response packets corresponding to a same diagnosis request packet) to be fed back to the remote diagnosis apparatus 210, so that the remote diagnosis apparatus 210 can parse the diagnosis response packet sequence associated with the same diagnosis request packet, thereby improving accuracy of a vehicle remote diagnosis result.

During implementation, a same packet format as that in the foregoing long diagnosis instruction sequence mechanism may be used in the packet fragmentation mechanism. For example, fourth indication information, fifth indication information, and sixth indication information may be added into the diagnosis response packet. The fourth indication information may be used to indicate whether the diagnosis response packet includes a packet header associated with a packet payload of the diagnosis response packet. When the diagnosis response packet does not include the packet header, the remote diagnosis apparatus 210 may parse the packet payload of the diagnosis response packet based on a packet format of the related onboard standard protocol, to obtain the vehicle remote diagnosis result. When the diagnosis response packet includes the packet header, the remote diagnosis apparatus 210 may parse the packet header associated with the packet payload and the packet payload based on the third packet format, to obtain the vehicle remote diagnosis result. The fifth indication information may be used to indicate whether the diagnosis response packet belongs to a group of diagnosis response packet sequences. When the diagnosis response packet is a single response packet, that is, does not belong to a group of diagnosis response packet sequences, the remote diagnosis apparatus 210 may parse the packet load of the diagnosis response packet based on a packet format of the related onboard standard protocol, to obtain the vehicle remote diagnosis result. When the diagnosis response packet belongs to a group of diagnosis response packet sequences, the remote diagnosis apparatus 210 may perform, based on the third packet format, packet assembly processing on at least two diagnosis response packets belonging to a same group of diagnosis response packet sequences, to obtain the vehicle remote diagnosis result. The sixth indication information may be used to indicate the following attribute information: an identifier of the group of diagnosis response packet sequences, a quantity of diagnosis response packets in the group of diagnosis response packets, and a sequence number of the diagnosis response packet in the group of diagnosis response packet sequences. Correspondingly, the remote diagnosis apparatus 210 may specifically perform, based on the sixth indication information, the operation of performing packet assembly processing and parse at least two diagnosis response packets belonging to a same group of diagnosis response packet sequences. Specific implementations of the fourth indication information, the fifth indication information, the sixth indication information, and the like may be the same as or similar to those of the first indication information, the second indication information, the third indication information, and the like. Details are not described herein again.

Therefore, in this embodiment of this application, the session mechanism, the long diagnosis instruction sequence mechanism, the packet fragmentation mechanism, and the like are introduced into the related onboard diagnostic standard protocol, to help accurately determine a matching relationship between a diagnosis request packet and a diagnosis response packet in a vehicle remote diagnosis scenario, so as to improve accuracy of remote diagnosis and analysis.

For ease of understanding, the following describes a new packet format in this embodiment of this application by using the DoIP standard protocol and the DoIP packet as an example.

FIG. 3 is a schematic diagram of a DoIP packet based on the DoIP ISO 13400 standard protocol. Referring to FIG. 3, the DoIP packet is a part of a payload (payload) field of an Ethernet packet. The Ethernet packet may further include fields such as a physical resource block (Physical Resource Block, PRB), a destination address (Destination or Target Address, DA), a source address (Source Address, SA), a type (type), and a cyclic redundancy check (cyclic redundancy check, CRC). The payload field of the Ethernet packet may further include an internet protocol (Internet Protocol, IP) packet header, a transmission control protocol (Transmission Control Protocol, TCP)/user datagram protocol (User Datagram Protocol, UDP) packet header, and the DoIP packet. The DoIP packet may include a packet header (header) and a payload (payload) of the DoIP packet. The packet header of the DoIP packet may include the following fields: a protocol version (protocol version) (1 byte (byte)), an inverse protocol version (inverse protocol version) (1 byte), a payload type (payload type) (2 bytes), a payload length (payload length) (4 bytes), and a payload (payload) (N bytes, where payload data varies with an actual payload type). Data bytes occupied by these fields in the DoIP packet and related descriptions are shown in the following Table 1.

**Table 1**

| Data byte (data byte) | Description (description) | Byte value (byte value) | Mnemonic (mnemonic) | Packet header of a DoIP packet |
|---|---|---|---|---|
| 0 | Protocol version | 0x01 | - | |
| 1 | Inverse protocol version | 0xFE | - | |
| 2 | Payload type | 0x8001 | GH_PT | |
| 3 | Payload type | | GH_PT | |
| 4 | Payload length | 7 | GH_PT | |
| 5 | Payload length | | GH_PT | |
| 6 | Payload length | | GH_PT | |
| 7 | Payload length | | GH_PT | |
| 8 | Source address | e.g. 0x0E00 | SA | DoIP payload |
| 9 | Source address | | SA | |
| 10 | Destination address | 0x0E00 | TA | |
| 11 | Destination address | | TA | |
| 12 | User data/read data by identifier | 0x22 | UD/RDBI | |
| 13 | User data/data identifier (high-order bit) | 0xF8 | UD/DID_HB | |
| 14 | User data/data identifier (low-order bit) | 0x10 | UD/DID_LB | |

It should be noted that FIG. 3 only briefly describes the packet format of the DoIP packet in the Ethernet packet. For details, refer to the DoIP standard protocol, and details are not described herein again.

In this embodiment of this application, the DoIP packet shown in FIG. 3 is used as an example, and a designed new packet format may include but is not limited to the following three cases:
①: Add a related field before the packet header of the DoIP packet.
②: Add a related field after the packet header of the DoIP packet and before the packet payload thereof.
③: Add a related field after the packet payload of the DoIP packet.

It should be understood that, in FIG. 3, an arrow is only used to represent a possible location of a new field in the DoIP packet, and does not limit a specific implementation of a related field.

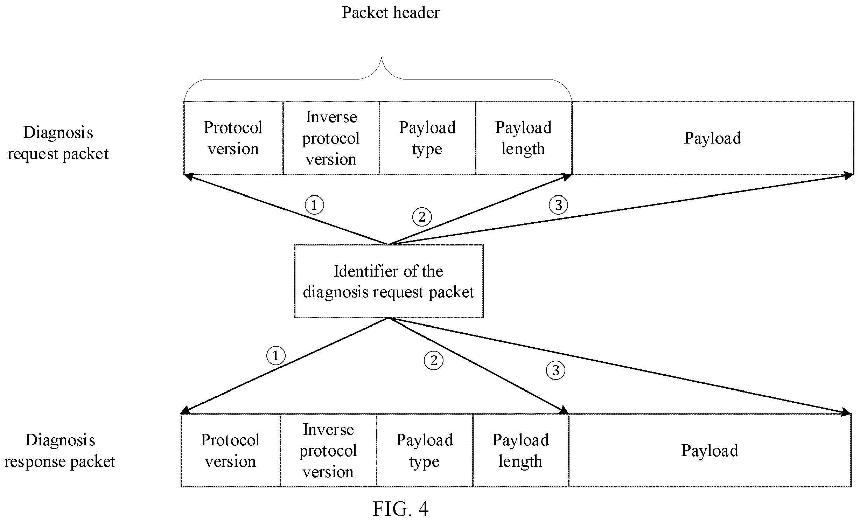

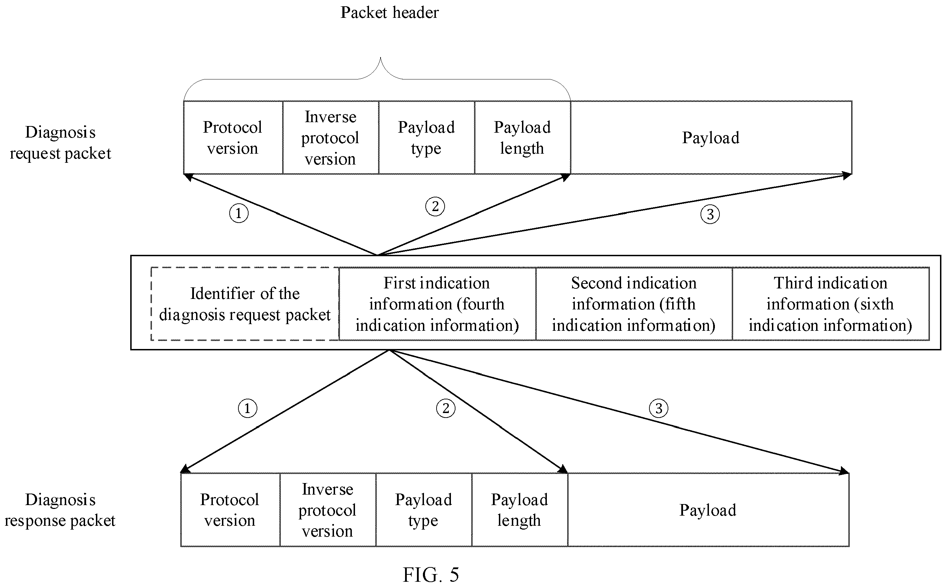

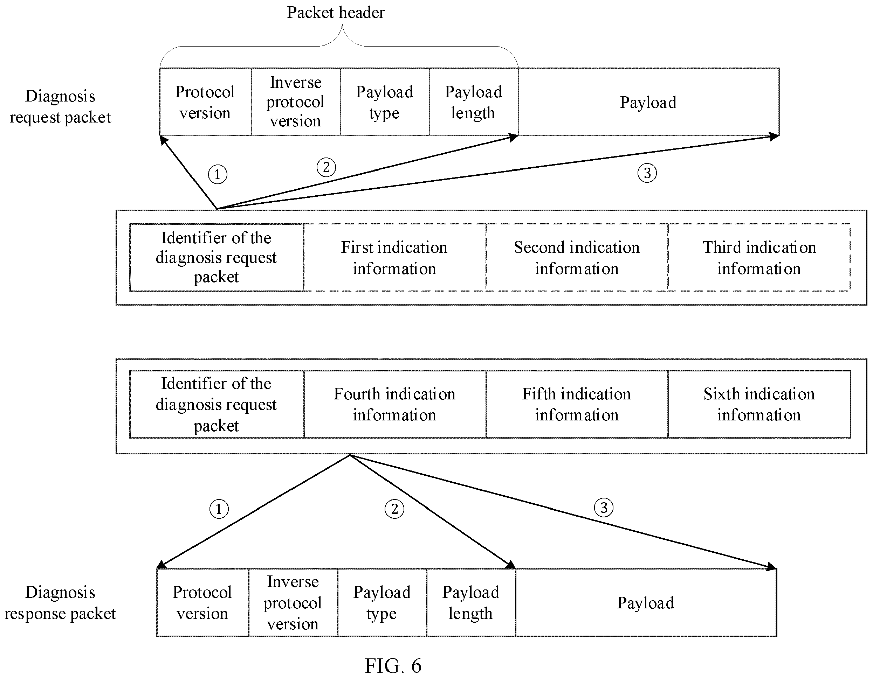

In the foregoing three cases, the new packet format designed in this embodiment of this application may include:
First packet format: When a message direction (namely, a direction in which a message points from a sender to a receiver) points from a cloud diagnosis application client to a vehicle, the remote diagnosis apparatus 210 adds the identifier of the diagnosis request packet into the diagnosis request packet. When the message direction points from the vehicle to the cloud diagnosis application client, the diagnosis response packet fed back by the diagnosis proxy apparatus 154 on the vehicle side to the remote diagnosis apparatus 210 based on the diagnosis request packet includes the identifier of the diagnosis request packet, as shown in FIG. 4.
Second packet format: When the message direction points from the cloud diagnosis application client to the vehicle, the remote diagnosis apparatus 210 adds the identifier (optional) of the diagnosis request packet, the first indication information, the second indication information, the third indication information, and the like into the diagnosis request packet. When the message direction points from the vehicle to the cloud diagnosis application client, the diagnosis response packet fed back by the diagnosis proxy apparatus 154 on the vehicle side to the remote diagnosis apparatus 210 may include the identifier (optional) of the diagnosis request packet, the fourth indication information, the fifth indication information, the sixth indication information, and the like, as shown in FIG. 5. For a specific meaning of the first/second/third/fourth/fifth/sixth indication information, refer to the foregoing related descriptions. Details are not described herein again. It should be noted that a dashed-line box in FIG. 5 indicates that the identifier of the diagnosis request packet is optional information.
Third packet format: When the message direction points from the cloud diagnosis application client to the vehicle, the remote diagnosis apparatus 210 adds the identifier of the diagnosis request packet into the diagnosis request packet. When the message direction points from the vehicle to the cloud diagnosis application client, the identifier of the corresponding diagnosis request packet, the fourth indication information, the fifth indication information, the sixth indication information, and the like are added into the diagnosis response packet sent by the diagnosis proxy apparatus 154 on the vehicle side to the remote diagnosis apparatus 210, as shown in FIG. 6. For a specific meaning of the fourth/fifth/sixth indication information, refer to the foregoing related descriptions. Details are not described herein again. It should be noted that a dashed-line box in FIG. 6 indicates that the first indication information, the second indication information, and the third indication information in the diagnosis request packet are optional information.

It should be noted that, in the foregoing three cases and the three packet formats thereof, the new related field may be added to a corresponding location in an original packet. Correspondingly, a meaning of each data byte in the packet and related explanations and descriptions thereof need to be changed as content specifically carried in the corresponding data byte changes. For example, in Case ① and Case ②, after the related field is added into the original packet, a location of the packet header and/or a location of the packet payload of the original packet in the packet move/moves backwards. In Case 03 , after the new related field is added after the packet payload, a location of the packet header and/or a location of the packet payload of the original packet in the packet remain/remains unchanged, and payload length indication information of the packet is changed.

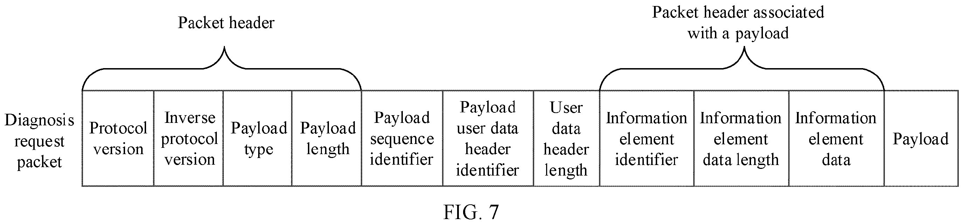

For ease of understanding, referring to FIG. 7, the following uses the second packet format in Case ② as an example to explain and describe each new field in the new packet format, as shown in Table 2.

**Table 2**

| Data byte (data byte) | Description (description) | Byte value (byte value) | Mnemonic (mnemonic) | |
|---|---|---|---|---|
| 8 | Payload sequence identifier (payload sequence ID) | e.g. 0x00000001 | - | Packet header associated with a payload of a DoIP packet |
| 9 | | | - | |
| 10 | | | - | |
| 11 | | | - | |
| 12 | Payload user data header identifier (User Data Header Indicator, udhi) | e.g. 0x01 | UDHI | |
| 13 | User data header length (not including a length of UDHI) | 8 | UDHL | |
| 14 | Information element identifier | e.g. 0x01 | IEI | |
| 15 | Information element data length (not including a length of the information element identifier) | 6 | IEIDL | |
| 16 | Identifier of a group of packet sequences (high-order bit) | e.g. 0xEF | IED | |
| 17 | Identifier of a group of packet sequences (low-order bit) | e.g. 0x98 | | |
| 18 | Quantity of packets in a group of packet sequences (high-order bit) | e.g. 0x00 | | |
| 19 | Quantity of packets in a group of packet sequences (low-order bit) | e.g. 0x02 | | |
| 20 | Sequence number of a packet in a packet sequence (high-order bit) | e.g. 0x00 | | |
| 21 | Sequence number of a packet in a packet sequence (low-order bit) | e.g. 0x01 | | |

In the foregoing Table 2, the data bytes 8 to 21 represented in bold carry new related fields, and meanings thereof are as follows:
(1) The payload sequence identifier located in the bytes 8 to 11 is the identifier of the diagnosis request packet, and is used to uniquely identify the diagnosis request packet; or is the identifier (that is, payload sequence identifiers in a diagnosis request packet and a diagnosis response packet that are in a pair need to be the same) that is of the corresponding diagnosis request packet and that is in the diagnosis response packet, and may be used to determine a matching relationship between the diagnosis response packet and the corresponding diagnosis request packet. The payload sequence identifier may be a cumulative value in the sequence, and may be used cyclically.
(2) The payload user data header identifier located in the byte 12 is the first indication information (or the fourth indication information), and may be used to indicate whether the diagnosis request packet (or the diagnosis response packet) includes the packet header associated with the packet payload. If a value of the payload user data header identifier is 0x00, it may indicate that the packet does not include the packet header associated with the packet payload. If a value of the payload user data header identifier is 0x01, it may indicate that the packet includes the packet header associated with the packet payload.
(3) The user data header length located in the byte 13 may be used to indicate a length of the packet header associated with the packet payload, and the length does not include the length of the payload user data header identifier. It should be understood that, in this embodiment of this application, the user data header length located in the byte 13 may also be considered as a part of the first indication information.
(4) The information element identifier located in the byte 14 is the second indication information (or the fifth indication information), and may be used to indicate whether the packet belongs to a group of diagnosis request packet sequences (or diagnosis response packet sequences). If a value of the information element identifier is 0x00, it indicates that the packet is a single packet and does not belong to a packet sequence. If a value of the information element identifier is 0x01, it indicates that the packet belongs to a packet sequence.
(5) The information element data length located in the byte 15 may be used to indicate a length of information element data, and the length does not include the length of the information element identifier. The information element data located in the bytes 16 to 21 is attribute information related to the packet payload. When the packet is parsed based on these information elements, a packet sequence to which the packet belongs, a quantity of packets in the packet sequence, a sequence number of the packet in the corresponding packet sequence, and the like may be known. This helps determine a matching relationship between a diagnosis request packet and a diagnosis response packet, so as to improve accuracy of vehicle remote diagnosis. Content of the bytes 15 to 21 may be considered as the third indication information (or the sixth indication information).

Content that is located in the bytes 0 to 7 and the bytes 22 to 28 and that is not shown in Table 2 may be content located in the bytes 0 to 7 and the bytes 8 to 14 in Table 1, and ISO 13400 may be reused. For details, refer to Table 1 and the DoIP standard protocol. Details are not described herein again. Alternatively, in this embodiment of this application, a new protocol version and a new packet format may be designed, and a related packet includes the field shown in Table 2. Details are not described herein again.

It should be noted that the foregoing only uses the DoIP standard protocol and the DoIP packet as an example to describe a packet format that may be used in this embodiment of this application. It should be understood that in another related onboard diagnostic standard protocol, a new packet format may have another structure. This is not limited in this embodiment of this application. In FIG. 7, a rectangular box is only used as an example to represent a field that may be included in a packet, and does not limit information such as a field name and a byte length occupied by the field. In addition, for each new packet format, there may be a corresponding protocol version. The remote diagnosis apparatus 210 and the diagnosis proxy apparatus 154 on the vehicle side may further negotiate with each other for a protocol version used for communication between the two apparatuses, and transmit a packet based on the protocol version determined through negotiation. Details are not described herein.

The diagnosis request packet and the diagnosis response packet are constructed based on the foregoing packet format, and the session mechanism, the long diagnosis instruction sequence mechanism, or the packet fragmentation mechanism are introduced into the related onboard diagnostic standard protocol. In this way, the matching relationship between the diagnosis request packet and the diagnosis response packet can be accurately determined through matching in a vehicle remote diagnosis scenario. The diagnosis proxy apparatus on the vehicle side can accurately parse and respond to one or more received diagnosis request packets. Correspondingly, the remote diagnosis apparatus can accurately parse the diagnosis response packet from the vehicle to obtain the diagnosis analysis result, thereby improving accuracy of vehicle remote diagnosis and analysis.

In addition, the solution may be further used in the vehicle remote diagnosis scenario to negotiate for a sending, resending, and supplementary sending mechanism of a plurality of frames of diagnosis request packets and diagnosis response packets between the remote diagnosis apparatus 210 and the diagnosis proxy apparatus 154 on the vehicle side. With reference to a method flowchart, the following describes the vehicle remote diagnosis method in the embodiments of this application.

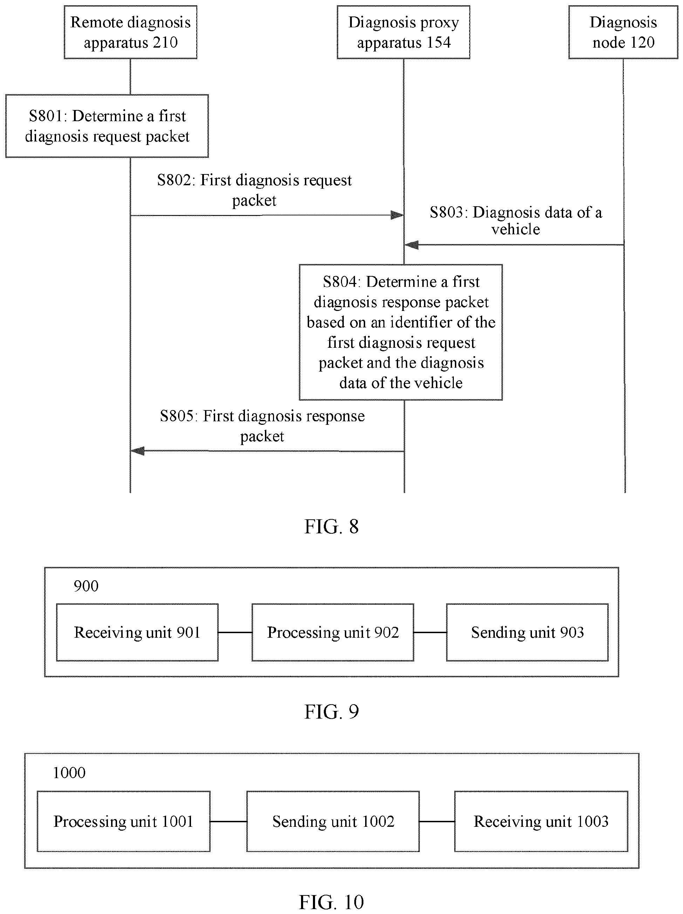

FIG. 8 is a schematic flowchart of a vehicle remote diagnosis method according to an embodiment of this application. The method may be collaboratively implemented by the remote diagnosis apparatus 210, and the diagnosis proxy apparatus 154 and each diagnosis node 120 on the vehicle 100 side that are shown in FIG. 2.

Referring to FIG. 8, the vehicle remote diagnosis method may include the following steps.

S801: The remote diagnosis apparatus 210 determines a first diagnosis request packet, where the first diagnosis request packet is used to perform remote diagnosis on a vehicle.

In this embodiment of this application, the remote diagnosis apparatus 210 may determine a required packet format from any one of the foregoing packet formats, and then determine the first diagnosis request packet based on the determined packet format.

For example, the first diagnosis request packet may include an identifier of the diagnosis request packet. Optionally, the first diagnosis request packet may include a payload and first indication information, and the first indication information may be used to indicate whether the first diagnosis request packet includes a packet header associated with the payload. Optionally, the first diagnosis request packet may further include second indication information, and the second indication information may be used to indicate whether the first diagnosis request packet belongs to a group of diagnosis request packet sequences. Optionally, the first diagnosis request packet may further include third indication information, and the third indication information may be used to indicate the following attribute information: an identifier of the group of diagnosis request packet sequences, a quantity of diagnosis request packets in the group of diagnosis request packet sequences, and a sequence number of the first diagnosis request packet in the group of diagnosis request packet sequences. For detailed packet content, refer to the foregoing related descriptions about the packet format. Details are not described herein again.

S802: The remote diagnosis apparatus 210 sends the first diagnosis request packet to the vehicle. Correspondingly, the diagnosis proxy apparatus on the vehicle 100 side receives the first diagnosis request packet from the remote diagnosis apparatus.

In this embodiment of this application, the diagnosis proxy apparatus may be referred to as an in-vehicle diagnosis edge node on the vehicle side. The diagnosis proxy apparatus may activate a corresponding diagnosis node (node) based on the diagnosis request packet from the remote diagnosis apparatus, and each diagnosis node obtains diagnosis data of the vehicle from an associated ECU.

In an example, the diagnosis proxy apparatus may be deployed in a T-Box on the vehicle side. In this case, the diagnosis proxy apparatus may parse the received first diagnosis request packet, and transparently transmit a parsing result to an in-vehicle gateway. The in-vehicle gateway may send the parsing result to a corresponding diagnosis node, and the corresponding diagnosis node exchanges information (for example, a diagnosis instruction) with each ECU based on the parsing result and by using an automotive bus, to obtain the diagnosis data of the vehicle.

In another example, the diagnosis proxy apparatus may be deployed in an in-vehicle gateway on the vehicle side. In this case, after receiving the first diagnosis request packet, as a mobile network route, a T-box transparently transmits the first diagnosis request packet to the in-vehicle gateway. The diagnosis proxy apparatus deployed in the in-vehicle gateway parses the received first diagnosis request packet, and sends a parsing result to a corresponding diagnosis node, and the corresponding diagnosis node exchanges information (for example, a diagnosis instruction) with each ECU based on the parsing result and by using an automotive bus, to obtain the diagnosis data of the vehicle.

S803: The diagnosis proxy apparatus 154 on the vehicle 100 side obtains the diagnosis data of the vehicle from each diagnosis node 120 on the vehicle 100 side based on the first diagnosis request packet.

S804: The diagnosis proxy apparatus 154 on the vehicle 100 side determines a first diagnosis response packet based on the identifier of the first diagnosis request packet and the diagnosis data of the vehicle.

In this embodiment of this application, the diagnosis data is obtained based on the first diagnosis request packet. For example, the diagnosis proxy apparatus 154 may send a diagnosis instruction related to the first diagnosis request packet to a corresponding diagnosis node 120, the diagnosis node 120 may deliver the diagnosis instruction to a specific ECU, the ECU may collect vehicle data based on the diagnosis instruction to obtain the diagnosis data of the vehicle, and the ECU may return the collected diagnosis data to the diagnosis node 120. The diagnosis node 120 may send the obtained diagnosis data to the diagnosis proxy apparatus 154, and the diagnosis proxy apparatus 154 may organize and pack the identifier of the first diagnosis request packet and the diagnosis data of the vehicle based on a used packet format, to obtain the first diagnosis response packet.

S805: The diagnosis proxy apparatus 154 on the vehicle 100 side sends the first diagnosis response packet to the remote diagnosis apparatus 210. Correspondingly, the remote diagnosis apparatus 210 receives the first diagnosis response packet of the vehicle.

In this embodiment of this application, the first diagnosis response packet may include the identifier of the first diagnosis request packet and the diagnosis data of the vehicle. The remote diagnosis apparatus 210 may know, based on the identifier, a specific first diagnosis request packet to which the first diagnosis response packet responds. Therefore, the remote diagnosis apparatus 210 can parse the diagnosis data in the first diagnosis response packet to accurately obtain a vehicle remote diagnosis result corresponding to the first diagnosis request packet, so as to implement remote real-time diagnosis on the vehicle. Optionally, the remote diagnosis apparatus 210 may further output diagnosis result data. For example, the diagnosis result is output by using an output device such as a user interface or a speaker. This is not limited in this embodiment of this application.

It should be noted that before implementing S801, the remote diagnosis apparatus 210 may establish a secure communication connection to the vehicle by initiating a connection request to the vehicle, to activate a remote diagnosis link between the remote diagnosis apparatus 210 and the vehicle based on the communication connection, so that the remote diagnosis apparatus 210 performs remote diagnosis on the vehicle. During implementation, the remote diagnosis apparatus 210 may send, to the vehicle, an activation request packet for activating onboard diagnostic protocol routing, and the diagnosis proxy apparatus 154 on the vehicle side may activate M diagnosis nodes on the vehicle side based on the activation request packet. Correspondingly, the diagnosis proxy apparatus 154 may send, to the remote diagnosis apparatus 210, an activation response packet for activating onboard diagnostic protocol routing. When the remote diagnosis link between the remote diagnosis apparatus 210 and each diagnosis node of the vehicle is activated, the remote diagnosis apparatus 210 may send a diagnosis request packet to a corresponding diagnosis node, to perform remote fault diagnosis on the vehicle.

After S805 is implemented, if remote diagnosis on the vehicle needs to be ended, the remote diagnosis apparatus may send, to the vehicle, a disable request packet for disabling onboard diagnostic protocol routing, and the diagnosis proxy apparatus on the vehicle side may disable each diagnosis node on the vehicle side based on the disable request packet. Correspondingly, the diagnosis proxy apparatus 154 may send a disable response packet to the remote diagnosis apparatus 210. When the remote diagnosis link between the remote diagnosis apparatus 210 and each diagnosis node of the vehicle is disabled, the remote diagnosis apparatus 210 cannot perform remote real-time diagnosis on the vehicle. If remote real-time diagnosis needs to be performed on the vehicle, the remote diagnosis link between the remote diagnosis apparatus 210 and each diagnosis node of the vehicle needs to be reactivated based on the foregoing method.

In addition, in this embodiment of this application, based on packets in different formats that are shown in FIG. 4 to FIG. 6 and that are used for the first diagnosis request packet and/or the first diagnosis response packet, the diagnosis proxy apparatus 154 on the vehicle side or the remote diagnosis apparatus 210 processes a corresponding packet in different manners. The following uses an example to describe possible implementations of some or all steps in S801 to S805 based on different packet formats shown in FIG. 4 to FIG. 6.

Example 1: The first diagnosis request packet is a single diagnosis request packet (that is, does not belong to a group of diagnosis request packet sequences), and the first diagnosis response packet is a single diagnosis response packet (that is, does not belong to a group of diagnosis response packet sequences).

In this example, only the identifier of the first diagnosis request packet may be added into the first diagnosis request packet (as shown in FIG. 4), or the first indication information may be added into the first diagnosis request packet. A value of the first indication information may be 0x00, indicating that the first diagnosis request packet does not include the packet header associated with the packet payload. Correspondingly, only the identifier of the first diagnosis request packet may be added into the first diagnosis response packet (as shown in FIG. 4), or fourth indication information may be added into the first diagnosis response packet. A value of the fourth indication information may be 0x00, indicating that the first diagnosis request packet does not include the packet header associated with the packet payload.

Example 2: The first diagnosis request packet is a single diagnosis request packet (that is, does not belong to a group of diagnosis request packet sequences), and the first diagnosis response packet belongs to a group of diagnosis response packet sequences.

In this example, only the identifier of the first diagnosis request packet may be added into the first diagnosis request packet (as shown in FIG. 4), or the first indication information may be added into the first diagnosis request packet. A value of the first indication information may be 0x00, indicating that the first diagnosis request packet does not include the packet header associated with the packet payload.

The diagnosis proxy apparatus 154 may send the diagnosis data of the vehicle a plurality of times through packet fragmentation.

In S804, when the diagnosis data of the vehicle meets a first packet fragmentation condition, the diagnosis proxy apparatus 154 may determine at least two diagnosis response packets based on the identifier of the first diagnosis request packet and the diagnosis data. In S805, the diagnosis proxy apparatus 154 may send a group of diagnosis response packet sequences to the remote diagnosis apparatus 210, and the group of diagnosis response packet sequences includes the at least two diagnosis response packets. The at least two diagnosis response packets include the first diagnosis response packet, the at least two diagnosis response packets belong to a same group of diagnosis response packet sequences, the at least two diagnosis response packets each include the identifier of the first diagnosis request packet, and each diagnosis response packet further includes fourth indication information, fifth indication information, and sixth indication information, to indicate an association relationship between each diagnosis response packet and a diagnosis response packet sequence to which the diagnosis response packet belongs, and related attribute information of the packet payload. For a meaning of the fourth/fifth/sixth indication information, refer to the foregoing related descriptions. Details are not described herein again.

Correspondingly, the remote diagnosis apparatus 210 may receive at least two diagnosis response packets from the vehicle, and perform packet assembly on at least two diagnosis response packets belonging to a same group of diagnosis response packet sequences, where the at least two diagnosis response packets include the first diagnosis response packet.

Example 3: The first diagnosis request packet belongs to a group of diagnosis request packet sequences, and the first diagnosis response packet belongs to a group of diagnosis response packet sequences.

In this example, a diagnosis task may be, for example, triggered based on a group of continuous diagnosis instruction transactions, and the remote diagnosis apparatus may determine a group of diagnosis request packet sequences based on the group of continuous diagnosis instruction transactions (for example, each diagnosis instruction transaction corresponds to a diagnosis request packet). The group of diagnosis request packet sequences includes at least two diagnosis request packets, the at least two diagnosis request packets include the first diagnosis request packet, and each diagnosis request packet in the group of diagnosis request packet sequences has a unique identifier. Each diagnosis request packet further includes the corresponding first indication information, second indication information, and third indication information, to indicate an association relationship between each diagnosis request packet and a diagnosis request packet sequence to which the diagnosis request packet belongs, and related attribute information of the packet payload. For a meaning of the first/second/third indication information, refer to the foregoing related descriptions. Details are not described herein again.

Correspondingly, the diagnosis proxy apparatus 154 on the vehicle side may receive at least two diagnosis request packets from the remote diagnosis apparatus 210, and perform packet assembly processing on at least two diagnosis request packets belonging to a same diagnosis request packet sequence, where the at least two diagnosis request packets include the first diagnosis request packet.

For at least two diagnosis request packets in a group of diagnosis request packet sequences, the diagnosis proxy apparatus 154 on the vehicle side may determine, based on an identifier of each diagnosis request packet and corresponding diagnosis data, a diagnosis response packet corresponding to the diagnosis request packet. Diagnosis response packets respectively corresponding to the at least two diagnosis request packets may form a group of diagnosis response packet sequences, and the diagnosis proxy apparatus 154 may feed back the group of diagnosis response packet sequences to the remote diagnosis proxy apparatus. For the diagnosis data corresponding to each diagnosis request packet, if the part of diagnosis data meets a first packet fragmentation condition (for example, a data amount exceeds a data packet capacity limit of the diagnosis response packet), the diagnosis proxy apparatus 154 may determine at least two diagnosis response packets based on the part of diagnosis data, that is, perform packet fragmentation on the diagnosis data corresponding to the diagnosis request packet, where the at least two diagnosis response packets belong to a same group of diagnosis response packet sequences, and the at least two diagnosis response packets each include an identifier of a same diagnosis request packet (for example, the first diagnosis request packet).

It should be understood that in this embodiment of this application, at least two diagnosis response packets corresponding to one diagnosis request packet belong to a group of diagnosis response packet sequences. For ease of differentiation, if a diagnosis request packet belongs to a group of diagnosis request packet sequences and the diagnosis request packet corresponds to at least two diagnosis response packets, a group of diagnosis response packet sequences to which the at least two diagnosis response packets belong may be considered as a subsequence of a diagnosis response packet sequence corresponding to the group of diagnosis request packet sequences.

Example 4: The first diagnosis request packet belongs to a group of diagnosis request packet sequences.

In this example, if the diagnosis proxy apparatus 154 on the vehicle side temporarily receives only a part of diagnosis request packets in a group of diagnosis request packet sequences (for example, a group of diagnosis request packet sequences to which the first diagnosis request packet belongs) due to uncertainty such as a network delay and network congestion, for another diagnosis request packet (for example, the first diagnosis request packet) that is not received in the group of diagnosis request packet sequences, the diagnosis proxy apparatus 154 may determine, based on related indication information in the received diagnosis request packet, an identifier of the group of diagnosis request packet sequences and a sequence number of the diagnosis request packet (for example, the first diagnosis request packet) that is not received in the group of diagnosis request packet sequences, and indicate, based on the identifier of the group of diagnosis request packet sequences and the sequence number of the first diagnosis request packet in the group of diagnosis request packet sequences, the remote diagnosis apparatus to send the first diagnosis request packet. That is, the diagnosis proxy apparatus 154 may indicate the remote diagnosis apparatus 210 to send, send for supplement, or resend the first diagnosis request packet.

During implementation, after S801, the diagnosis proxy apparatus 154 may send indication information to the remote diagnosis apparatus 210, where the indication information may be used to indicate an identifier of a group of diagnosis request packet sequences and a sequence number of the first diagnosis request packet in the group of diagnosis request packet sequences. Correspondingly, the remote diagnosis apparatus 210 may receive the indication information, and send the first diagnosis request packet to the vehicle based on the identifier of the group of diagnosis request packet sequences and the sequence number of the first diagnosis request packet in the group of diagnosis request packet sequences that are indicated by the vehicle. Therefore, in S803 and S804, the diagnosis proxy apparatus 154 may perform packet assembly on at least two diagnosis request packets belonging to a same group of diagnosis request packet sequences, where the at least two diagnosis request packets include the first diagnosis request packet.

Example 5: The first diagnosis response packet belongs to a group of diagnosis response packet sequences.

In this example, if the remote diagnosis apparatus 210 temporarily receives only a part of diagnosis response packets in a group of diagnosis response packet sequences (for example, a group of diagnosis response packet sequences to which the first diagnosis response packet belongs) due to uncertainty such as a network delay and network congestion, for another diagnosis response packet (for example, the first diagnosis response packet) that is not received in the group of diagnosis response packet sequences, the remote diagnosis apparatus 210 may determine, based on related indication information in the received diagnosis response packet, an identifier of the group of diagnosis response packet sequences and a sequence number of the diagnosis response packet (for example, the first diagnosis response packet) that is not received in the group of diagnosis response packet sequences, and indicate, based on the identifier of the group of diagnosis response packet sequences and the sequence number of the first diagnosis response packet in the group of diagnosis response packet sequences, the diagnosis proxy apparatus 154 on the vehicle side to send the first diagnosis response packet. That is, the diagnosis proxy apparatus 154 may indicate the remote diagnosis apparatus 210 to send, send for supplement, or resend the first diagnosis response packet.

During implementation, after S805, the remote diagnosis apparatus 210 may send indication information to the diagnosis proxy apparatus 154 on the vehicle side, where the indication information may be used to indicate an identifier of a group of diagnosis response packet sequences and a sequence number of the first diagnosis response packet in the group of diagnosis response packet sequences. Correspondingly, the diagnosis proxy apparatus 154 may receive the indication information, and send the first diagnosis response packet to the remote diagnosis apparatus 210 based on the identifier of the group of diagnosis response packet sequences and the sequence number of the first diagnosis response packet in the group of diagnosis response packet sequences that are indicated by the vehicle. Therefore, the remote diagnosis apparatus 210 may perform packet assembly on at least two diagnosis response packets belonging to a same group of diagnosis response packet sequences, where the at least two diagnosis response packets include the first diagnosis request packet.

Therefore, based on the foregoing method and example, a packet format of the related onboard diagnostic standard protocol may be improved, and a related field is added into a packet, to introduce a session mechanism, a long diagnosis instruction sequence mechanism, a packet fragmentation mechanism, and the like, so as to reduce a problem of packet disorder caused by uncertainty such as a network delay or network congestion. This helps accurately determine a matching relationship between a diagnosis request packet and a diagnosis response packet in a vehicle remote diagnosis scenario, so as to improve accuracy of remote diagnosis and analysis, and meet a development requirement of remote diagnosis/writing upgrade technology for an intelligent vehicle in the future.

An embodiment of this application further provides a vehicle remote diagnosis apparatus, configured to perform the method performed by the diagnosis proxy apparatus on the vehicle side in the foregoing embodiment. For related features, refer to the foregoing method embodiment. Details are not described herein again.

As shown in FIG. 9, the apparatus 900 may include: a receiving unit 901, configured to receive a first diagnosis request packet from a remote diagnosis apparatus, where the first diagnosis request packet is used to perform remote diagnosis on a vehicle, and the first diagnosis request packet includes an identifier of the first diagnosis request packet; a processing unit 902, configured to determine a first diagnosis response packet based on the identifier of the first diagnosis request packet and diagnosis data of the vehicle, where the diagnosis data is obtained based on the first diagnosis request packet; and a sending unit 903, configured to send the first diagnosis response packet to the remote diagnosis apparatus. For a specific implementation, refer to the detailed descriptions in the embodiments shown in FIG. 2 to FIG. 8. Details are not described herein again.

An embodiment of this application further provides a vehicle remote diagnosis apparatus, configured to perform the method performed by the remote diagnosis apparatus in the foregoing method embodiment. For related features, refer to the foregoing method embodiment. Details are not described herein again.

As shown in FIG. 10, in an example, the apparatus 1000 may include: a processing unit 1001, configured to determine a first diagnosis request packet, where the first diagnosis request packet is used to perform remote diagnosis on a vehicle, and the first diagnosis request packet includes an identifier of the first diagnosis request packet; a sending unit 1002, configured to send the first diagnosis request packet to the vehicle; and a receiving unit 1003, configured to receive a first diagnosis response packet of the vehicle, where the first diagnosis response packet includes the identifier of the first diagnosis request packet and diagnosis data of the vehicle, and the diagnosis data is obtained based on the first diagnosis request packet. For a specific implementation, refer to the detailed descriptions in the embodiments shown in FIG. 2 to FIG. 8. Details are not described herein again.

It should be noted that, in the embodiments of this application, unit division is an example, and is merely logical function division. During actual implementation, another division manner may be used. Functional units in the embodiments of this application may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, the technical solutions of this application essentially, or the part contributing to the prior art, or all or a part of the technical solutions may be implemented in the form of a software product. The computer software product is stored in a storage medium and includes several instructions for instructing a computer device (which may be a personal computer, a server, or a network device) or a processor (processor) to perform all or a part of the steps of the methods in the embodiments of this application. The foregoing storage medium includes any medium that can store program code, such as a USB flash drive, a removable hard disk, a read-only memory (ROM, Read-Only Memory), a random access memory (RAM, Random Access Memory), a magnetic disk, or an optical disc.

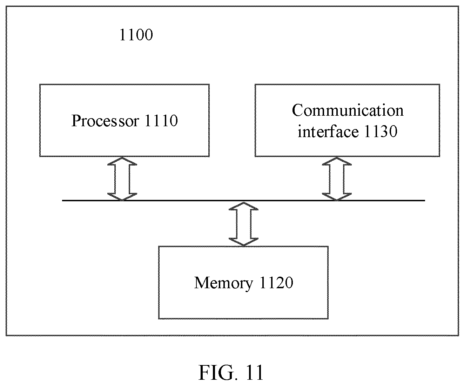

In a simple embodiment, a person skilled in the art may figure out that the form shown in FIG. 11 may be used for the remote diagnosis apparatus or the diagnosis proxy apparatus on the vehicle side in the foregoing embodiment.

An apparatus 1100 shown in FIG. 11 includes at least a processor 1110 and a memory 1120, and optionally, may further include a communication interface 1130.

In this embodiment of this application, a specific connection medium between the processor 1110 and the memory 1120 is not limited.

The apparatus shown in FIG. 11 further includes the communication interface 1130. When communicating with another device, the processor 1110 may transmit data by using the communication interface 1130.

When the form shown in FIG. 11 is used for the remote diagnosis apparatus, the processor 1110 in FIG. 11 may invoke computer-executable instructions stored in the memory 1120, so that the device 1100 can perform the method performed by the remote diagnosis apparatus in any one of the foregoing method embodiments.

When the form shown in FIG. 11 is used for the diagnosis proxy apparatus on the vehicle side, the processor 1110 in FIG. 11 may invoke computer-executable instructions stored in the memory 1120, so that the device 1100 can perform the method performed by the diagnosis proxy apparatus in any one of the foregoing method embodiments.

An embodiment of this application further relates to a chip system. The chip system includes a processor, configured to invoke a computer program or computer instructions stored in a memory, so that the processor performs the method in any one of the foregoing embodiments.

In a possible implementation, the processor is coupled to the memory by using an interface.

In a possible implementation, the chip system further includes a memory, and the memory stores a computer program or computer instructions.

An embodiment of this application further relates to a processor. The processor is configured to invoke a computer program or computer instructions stored in a memory, so that the processor performs the method in any one of the foregoing embodiments.

It should be understood that the embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

These computer program instructions may be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may be loaded onto a computer or another programmable data processing device, so that a series of operations and steps are performed on the computer or the another programmable device to generate computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to the embodiments of this application without departing from the scope of the embodiments of this application. This application is intended to cover these modifications and variations provided that they fall within the scope of protection defined by the following claims and their equivalent technologies.

## Claims

1. A vehicle remote diagnosis method, comprising:
receiving a first diagnosis request packet from a remote diagnosis apparatus, wherein the first diagnosis request packet is used to perform remote diagnosis on a vehicle, and the first diagnosis request packet comprises an identifier of the first diagnosis request packet;
determining a first diagnosis response packet based on the identifier of the first diagnosis request packet and diagnosis data of the vehicle, wherein the diagnosis data is obtained based on the first diagnosis request packet; and
sending the first diagnosis response packet to the remote diagnosis apparatus.

2. The method according to claim 1, wherein the first diagnosis request packet further comprises a payload and first indication information, and the first indication information is used to indicate that the first diagnosis request packet comprises a data header associated with the payload.

3. The method according to claim 1 or 2, wherein the first diagnosis request packet further comprises second indication information, and the second indication information is used to indicate that the first diagnosis request packet belongs to a group of diagnosis request packet sequences.

4. The method according to claim 3, wherein the first diagnosis request packet further comprises third indication information, and the third indication information is used to indicate the following attribute information:
an identifier of the group of diagnosis request packet sequences, a quantity of diagnosis request packets in the group of diagnosis request packet sequences, and a sequence number of the first diagnosis request packet in the group of diagnosis request packet sequences.

5. The method according to any one of claims 1 to 4, wherein the first diagnosis request packet belongs to a group of diagnosis request packet sequences, and the method further comprises:
indicating, based on an identifier of the group of diagnosis request packet sequences and a sequence number of the first diagnosis request packet in the group of diagnosis request packet sequences, the remote diagnosis apparatus to send the first diagnosis request packet.

6. The method according to any one of claims 1 to 5, wherein the first diagnosis request packet belongs to a group of diagnosis request packet sequences, and the method further comprises:
performing packet assembly on at least two diagnosis request packets belonging to a same group of diagnosis request packet sequences, wherein the at least two diagnosis request packets comprise the first diagnosis request packet.

7. The method according to any one of claims 1 to 6, wherein the determining a first diagnosis response packet based on the identifier of the first diagnosis request packet and diagnosis data of the vehicle comprises:
when the diagnosis data meets a first packet fragmentation condition, determining at least two diagnosis response packets based on the identifier of the first diagnosis request packet and the diagnosis data, wherein the at least two diagnosis response packets comprise the first diagnosis response packet, the at least two diagnosis response packets belong to a same group of diagnosis response packet sequences, and the at least two diagnosis response packets each comprise the identifier of the first diagnosis request packet.

8. A vehicle remote diagnosis method, comprising:
determining a first diagnosis request packet, wherein the first diagnosis request packet is used to perform remote diagnosis on a vehicle, and the first diagnosis request packet comprises an identifier of the first diagnosis request packet;
sending the first diagnosis request packet to the vehicle; and
receiving a first diagnosis response packet of the vehicle, wherein the first diagnosis response packet comprises the identifier of the first diagnosis request packet and diagnosis data of the vehicle, and the diagnosis data is obtained based on the first diagnosis request packet.

9. The method according to claim 8, wherein the first diagnosis request packet further comprises a payload and first indication information, and the first indication information is used to indicate that the first diagnosis request packet comprises a data header associated with the payload.

10. The method according to claim 8 or 9, wherein the first diagnosis request packet further comprises second indication information, and the second indication information is used to indicate that the first diagnosis request packet belongs to a group of diagnosis request packet sequences.

11. The method according to claim 10, wherein the first diagnosis request packet further comprises third indication information, and the third indication information is used to indicate the following attribute information:
an identifier of the group of diagnosis request packet sequences, a quantity of diagnosis request packets in the group of diagnosis request packet sequences, and a sequence number of the first diagnosis request packet in the group of diagnosis request packet sequences.

12. The method according to any one of claims 8 to 11, wherein the determining a first diagnosis request packet comprises:
when a diagnosis task meets a second packet fragmentation condition, determining at least two diagnosis request packets, wherein the at least two diagnosis request packets comprise the first diagnosis request packet, and the at least two diagnosis request packets belong to a same group of diagnosis request packet sequences.

13. The method according to claim 12, wherein the sending the first diagnosis request packet to the vehicle comprises:
sending, to the vehicle, a group of diagnosis request packet sequences to which the first diagnosis request packet belongs; or
sending the first diagnosis request packet to the vehicle based on an identifier of a group of diagnosis request packet sequences and a sequence number of the first diagnosis request packet in the group of diagnosis request packet sequences that are indicated by the vehicle.

14. The method according to any one of claims 8 to 13, wherein the first diagnosis response packet belongs to a group of diagnosis response packet sequences, and the method further comprises:
performing packet assembly on at least two diagnosis response packets belonging to a same group of diagnosis response packet sequences, wherein the at least two diagnosis response packets comprise the first diagnosis response packet.

15. A vehicle remote diagnosis apparatus, comprising:
a receiving unit, configured to receive a first diagnosis request packet from a remote diagnosis apparatus, wherein the first diagnosis request packet is used to perform remote diagnosis on a vehicle, and the first diagnosis request packet comprises an identifier of the first diagnosis request packet;
a processing unit, configured to determine a first diagnosis response packet based on the identifier of the first diagnosis request packet and diagnosis data of the vehicle, wherein the diagnosis data is obtained based on the first diagnosis request packet; and
a sending unit, configured to send the first diagnosis response packet to the remote diagnosis apparatus.

16. The apparatus according to claim 15, wherein the first diagnosis request packet further comprises a payload and first indication information, and the first indication information is used to indicate that the first diagnosis request packet comprises a data header associated with the payload.

17. The apparatus according to claim 15 or 16, wherein the first diagnosis request packet further comprises second indication information, and the second indication information is used to indicate that the first diagnosis request packet belongs to a group of diagnosis request packet sequences.

18. The apparatus according to claim 17, wherein the first diagnosis request packet further comprises third indication information, and the third indication information is used to indicate the following attribute information:
an identifier of the group of diagnosis request packet sequences, a quantity of diagnosis request packets in the group of diagnosis request packet sequences, and a sequence number of the first diagnosis request packet in the group of diagnosis request packet sequences.

19. The apparatus according to any one of claims 15 to 18, wherein the first diagnosis request packet belongs to a group of diagnosis request packet sequences, and the apparatus further comprises:
an indication unit, configured to indicate, based on an identifier of the group of diagnosis request packet sequences and a sequence number of the first diagnosis request packet in the group of diagnosis request packet sequences, the remote diagnosis apparatus to send the first diagnosis request packet.

20. The apparatus according to any one of claims 15 to 19, wherein the first diagnosis request packet belongs to a group of diagnosis request packet sequences, and the apparatus further comprises:
a packet assembly unit, configured to perform packet assembly on at least two diagnosis request packets belonging to a same group of diagnosis request packet sequences, wherein the at least two diagnosis request packets comprise the first diagnosis request packet.

21. The apparatus according to any one of claims 15 to 20, wherein the processing unit is configured to:
when the diagnosis data meets a first packet fragmentation condition, determine at least two diagnosis response packets based on the identifier of the first diagnosis request packet and the diagnosis data, wherein the at least two diagnosis response packets comprise the first diagnosis response packet, the at least two diagnosis response packets belong to a same group of diagnosis response packet sequences, and the at least two diagnosis response packets each comprise the identifier of the first diagnosis request packet.

22. A vehicle remote diagnosis apparatus, comprising:
a processing unit, configured to determine a first diagnosis request packet, wherein the first diagnosis request packet is used to perform remote diagnosis on a vehicle, and the first diagnosis request packet comprises an identifier of the first diagnosis request packet;
a sending unit, configured to send the first diagnosis request packet to the vehicle; and
a receiving unit, configured to receive a first diagnosis response packet of the vehicle, wherein the first diagnosis response packet comprises the identifier of the first diagnosis request packet and diagnosis data of the vehicle, and the diagnosis data is obtained based on the first diagnosis request packet.

23. The apparatus according to claim 22, wherein the first diagnosis request packet further comprises a payload and first indication information, and the first indication information is used to indicate that the first diagnosis request packet comprises a data header associated with the payload.

24. The apparatus according to claim 22 or 23, wherein the first diagnosis request packet further comprises second indication information, and the second indication information is used to indicate that the first diagnosis request packet belongs to a group of diagnosis request packet sequences.

25. The apparatus according to claim 24, wherein the first diagnosis request packet further comprises third indication information, and the third indication information is used to indicate the following attribute information:
an identifier of the group of diagnosis request packet sequences, a quantity of diagnosis request packets in the group of diagnosis request packet sequences, and a sequence number of the first diagnosis request packet in the group of diagnosis request packet sequences.

26. The apparatus according to any one of claims 22 to 25, wherein the processing unit is configured to:
when a diagnosis task meets a second packet fragmentation condition, determine at least two diagnosis request packets, wherein the at least two diagnosis request packets comprise the first diagnosis request packet, and the at least two diagnosis request packets belong to a same group of diagnosis request packet sequences.

27. The apparatus according to claim 26, wherein the sending unit is configured to:
send, to the vehicle, a group of diagnosis request packet sequences to which the first diagnosis request packet belongs; or
send the first diagnosis request packet to the vehicle based on an identifier of a group of diagnosis request packet sequences and a sequence number of the first diagnosis request packet in the group of diagnosis request packet sequences that are indicated by the vehicle.

28. The apparatus according to any one of claims 22 to 27, wherein the first diagnosis response packet belongs to a group of diagnosis response packet sequences, and the apparatus further comprises:
a packet assembly unit, configured to perform packet assembly on at least two diagnosis response packets belonging to a same group of diagnosis response packet sequences, wherein the at least two diagnosis response packets comprise the first diagnosis response packet.

29. A vehicle remote diagnosis apparatus, comprising a processor and a memory, wherein
the memory is configured to store a program; and
the processor is configured to execute the program stored in the memory, so that the apparatus implements the method according to any one of claims 1 to 7.

30. A vehicle remote diagnosis apparatus, comprising a processor and a memory, wherein
the memory is configured to store a program; and
the processor is configured to execute the program stored in the memory, so that the apparatus implements the method according to any one of claims 8 to 14.

31. A vehicle remote diagnosis system, comprising:
the vehicle remote diagnosis apparatus according to any one of claims 15 to 21; and
the vehicle remote diagnosis apparatus according to any one of claims 22 to 28.

32. A computer-readable storage medium, wherein the computer-readable storage medium stores program code, and when the program code runs on a computer, the computer is enabled to perform the method according to any one of claims 1 to 7, or when the program code runs on a computer, the computer is enabled to perform the method according to any one of claims 8 to 14.

33. A computer program product, wherein when the computer program product runs on a computer, the computer is enabled to perform the method according to any one of claims 1 to 7 or perform the method according to any one of claims 8 to 14.
